# EUROPÄISCHE PATENTSCHRIFT

(11) **EP 1 634 884 B1**
(45) Veröffentlichungstag und Bekanntmachung des Hinweises auf die Patenterteilung: **14.02.2007**
(21) Anmeldenummer: 05017816.9
(22) Anmeldetag: 17.08.2005
(51) Int. Cl.: C07F 7/18

(54) **Verfahren zur Herstellung von Mercaptoorganyl (alkoxysilan)**
Process for preparing mercaptoorganyl alkoxy silanes
Procédé pour la préparation des (mercaptoorganyl)-alkoxysilanes

(30) Priorität: 07.09.2004 DE 102004043094; 03.05.2005 DE 102005020536
(43) Veröffentlichungstag der Anmeldung: 15.03.2006
(73) Patentinhaber: DEGUSSA AG, 40474 Düsseldorf (DE)
(72) Erfinder: Korth, Karsten, Dr,, 79639 Grenzach-Wyhlen (DE); Albert, Philipp, Dr., 79539 Lörrach (DE); Wolf, Dorit, Dr., 61440 Oberursel (DE); Seebald, Steffen, Dr., 63796 Kahl am Main (DE); Pieter, Reimund, Dr., 64625 Bensheim (DE); Alig, Alfred, 63826 Geiselbach-Omersbach (DE)

(56) Entgegenhaltungen:
- EP-A- 1 285 926
- DE-C- 915 334
- US-A- 5 493 058
- US-B1- 6 433 206
- SMITH BROADMENT H ET AL: "Rhenium sulphides as liquid-phse hydrogenation catalysts. A comparison with molybdenum sulphide and cobalt polysulphide" JOURNAL OF THE AMERICAN CHEMICAL SOCIETY, AMERICAN CHEMICAL SOCIETY, WASHINGTON, DC, US, Bd. 76, 20. März 1954 (1954-03-20), Seiten 1519-1523, XP002227638 ISSN: 0002-7863
- DATABASE BEILSTEIN [Online] BEILSTEIN INSTITUTE FOR ORGANIC CHEMISTRY, FRANKFURT-MAIN, DE; 31. Dezember 1996 (1996-12-31), XP002357068 Database accession no. reaction ID 4695657 & ELIZAGHEID, M. ET AL.: COLLECT. CZECH. CHEM. COMM., Bd. 61, 1996, Seiten S42-S44,

## Beschreibung

Die Erfindung betrifft ein Verfahren zur Herstellung von Mercaptoorganyl(alkoxysilan).

Aus US 6,147,242 ist ein Verfahren zur Herstellung von 3-Mercaptopropyl-triethoxysilan durch homolytische Spaltung von Bis(alkoxysilylorganyl)disulfiden bekannt. Dabei reagiert das Bis(alkoxysilylorganyl)disulfid mit einem Alkalimetall und einem Chlorsilan zum Silylalkylsulfanylsilan-Zwischenprodukt, welches danach in Gegenwart von Alkohol zum gewünschten Mercaptoalkylsilan umgewandelt wird.

Das Verfahren hat die Nachteile, daß ein zusätzliches Reagenz (Chloralkylsilan) verwendet werden muss, sowie der Notwendigkeit, gefährliches Alkalimetall zu verwenden und zu entsorgen und das Silylalkylsulfanylsilan-Zwischenprodukt vor dem Alkoholyseschritt zu isolieren.

Ferner ist aus US 6,433,206 ein Verfahren zur Herstellung von siliziumhaltigen Organomercaptanen durch Hydrierung von Bis(organylsilyl)polysulfiden unter Verwendung von Gruppe VIII Metallkatalysatoren die durch Wasser, H₂S bzw. Alkohole vor der Vergiftung bewahrt werden müssen, bekannt.

Dieses Verfahren hat den Nachteil, daß mindestens zwei zusätzliche Verfahrenschritte notwendig sind (Vermischung und Abtrennung des Entgiftungsreagenzes), die das Verfahren energieintensiver und unökonomischer gestalten. Werden Alkoxysilane mit langkettigen Alkoxysubstituenten (>C8) als Ausgangsstoff verwendet, wird z.B. die Aufarbeitung und destillative Abtrennung der als Entgiftungsreagenzien benötigten Alkohole zunehmend energieintensiver. Werden Alkohole als Vergiftungshemmer vewendet, die ungleich den Alkoholen sind, die für die Substitution der Alkoxysilane verwendet werden, können Umesterungen am Siliziumatom der verwendeten Edukte und entstandenen Produkte auftreten. Dadurch entstehen unerwünschte, gemischt veresterte Silanprodukte. Die Zugabe von Entgiftungsreagenzien ist deshalb aus praktischen und wirtschaftlichen Gesichtspunkten auf solche Alkohole beschränkt, die bereits als Alkoxygruppen im Edukt vorhanden sind. Zusätzlich hat das bekannte Verfahren den Nachteil, daß als Alternative zu den Alkoholen nur H₂S oder Wasser verfügbar sind. H₂S ist ein hochgiftiges Gas, dessen Verwendung, Bevorratung, Dosierung und Entsorgung einen hohen Anspruch an Sorgfalt, Risikobereitschaft, Anlagenqualität und -sicherheit stellt. Wasser ist bei der gleichzeitigen Verwendung von Alkoxysilanen zu vermeiden, da es die Ausgangs- und Produktverbindungen unter Hydrolyse zerstört.

Aufgabe der vorliegenden Erfindung ist es, ein Verfahren für die reduktive Spaltung von Bis(alkoxysilylorganyl)-polysulfiden zur Verfügung zu stellen, daß ohne die Verwendung von zusätzlichen Entgiftungsreagentien wie Wasser, Alkoholen oder Schwefelwasserstoff für die benötigten Metallkatalysatoren auskommt und einen hohen Umsatz ermöglicht.

Gegenstand der Erfindung ist ein Verfahren zur Herstellung von Mercaptoorganyl(alkoxysilan), welches dadurch gekennzeichnet ist, daß man Bis(alkoxysilylorganyl)-polysulfid bei Temperaturen von <190°C und Drücken <100 bar mit Wasserstoff und einem Übergangsmetallkatalysator ohne Zusatz von Wasser, Alkohol oder H₂S hydriert und die Katalysatorkonzentration bezogen auf das Katalytisch aktive Metall, 0,0001 bis 1 mmol pro 1 g Bis(alkoxysilylorganyl)polysulfid beträgt.

Die Reaktion kann unter Hydrogenolyse-Bedingungen durchgeführt werden. Der Übergangsmetallkatalysator kann in katalytisch wirksamen Mengen eingesetzt werden.

Das Bis(alköxysilylorganyl)polysulfid kann eine Verbindung der allgemeinen Formel (I)

Z-A-Sₓ-A-Z (I)

sein, wobei
x eine Zahl von 1 bis 14, vorzugsweise 1 bis 8, bevorzugt 2 bis 4, besonders bevorzugt 2-2,6 und 3,5-3,9, ist,
Z gleich oder verschieden SiX¹X²X³ oder Si(OCH₂-CH₂-)₃N ist und
X¹, X², X³ jeweils unabhängig voneinander bedeuten können Hydroxy (-OH),
eine lineare, verzweigte oder ringförmige Kohlenwasserstoffkette mit 1-18 Kohlenstoffatomen (C1-C18), bevorzugt mit C1-C10, vorzugsweise Methyl- ,Ethyl-, Propyl- oder Butyl-,
ein Alkylsäuresubstituent- (C_{y}H_{2y+1})-C(=O)O- mit y=1-25, beispielsweise Acetoxy- CH₃-(C=O)O-,
ein Cycloalkanrest mit 5-12 Kohlenstoffatomen,
ein Benzylrest, ein alkylsubstituierter Phenylrest, Alkoxygruppen, vorzugsweise (C₁-C₂₄) Alkoxy, mit linearen oder verzweigten Kohlenwasserstoffketten, besonders bevorzugt Methoxy- (CH₃O-), Ethoxy- (C₂H₅O-), Propoxy-(C₃H₇O-) oder Butoxy- (C₄H₉O-), Dodecyloxy- (C₁₂H₂₅O-), Tetradecyloxy- (C₁₄H₂₉O-), Hexadecyloxy- C₁₆H₃₃O-) oder Octadecyloxy- (C₁₈H₃₇O-),
eine Alkylethergruppe O-(CR^{I}₂ CR^{I}₂)-O-Alk,
eine Alkylpolyethergruppe O-(CR^{I}₂- CR^{I}₂O)ₐ-Alk, mit a = 2-25, bevorzugt a = 2-15, besonders bevorzugt a = 3-10, ganz besonders bevorzugt a = 3-6, R^{I} unabhängig voneinander H oder Alkylgruppe, vorzugsweise eine CH₃-Gruppe ist, Alk eine lineare oder verzweigte, gesättigte oder ungesättigte Alkylkette mit 1-30 Kohlenstoffatomen (C1-C30), bevorzugt C1-C20, besonders bevorzugt C4-C18, ganz besonders bevorzugt C8-C16;
eine Cycloalkoxygruppe mit (C₅-C₁₂)-Atomen,
A eine lineare oder verzweigte, gesättigte oder ungesättigte aliphatische, aromatische oder gemischt aliphatische/aromatische zweibindige C₁-C₃₀ umfassende Kohlenwasserstoffkette, vorzugsweise C₁-C₃, besonders bevorzugt (-CH₂-), (-CH₂-)₂, (-CH₂-)₃, (-CH(CH₃)-CH₂-) oder (-CH₂-CH(CH₃)-), ist.
Das Bis(alkoxysilylorganyl)polysulfid kann eine Mischung von Verbindungen der allgemeinen Formel (I) sein.

A kann anstatt mit Wasserstoffsubstituenten mit verschiedensten Substituenten versehen sein, wie zum Beispiel -CN, Halogenen, beispielsweise -Cl, -Br oder -F, Alkoholfunktionalitäten -OH, Alkoxiden -OAlkyl beziehungsweise -O-(C=O)-Alkyl. Als A können bevorzugt CH₂, CH₂CH₂, CH₂CH₂CH₂, CH₂CH(CH₃), CH₂CH₂CH₂CH₂, CH₂CH₂CH(CH₃), CH₂CH(CH₃)CH₂, CH₂CH₂CH₂CH₂CH₂, CH₂CH(CH₃)CH₂CH₂, CH₂CH₂CH(CH₃)CH₂, CH(CH₃)CH₂CH(CH₃) oder CH₂CH(CH₃)CH(CH₃) verwendet werden.

Die Gruppe Z = SiX¹X²X³ kann vorzugsweise -Si(OMe)₃, -Si(OEt)₃, -SiMe(OMe)₂, -SiMe(OEt)₂), -SiMe₂(OMe),-SiMe₂(OEt), -Si (OC₁₂H₂₅) ₃, Si (OC₁₄H₂₉) ₃, Si (OC₁₆H₃₃)₃, Si (OC₁₈H₃₇)₃, Si (OC₁₄H₂₉)₂ (OC₁₆H₃₃), Si (OC₁₄H₂₉) 2 (OC₁₈H₃₇), Si (OC₁₆H₃₃)₂ (OC₁₄H₂₉), Si (OC₁₆H₃₃)₂ (OC₁₈H₃₇), Si (OC₁₈H₃₇)₂ (OC₁₆H₃₃) oder Si (OC₁₄H₂₉) (OC₁₉H₃₇)₂ sein.

Als Bis(alkoxysilylorganyl)polysulfid der allgemeinen Formel (I) kann man beispielsweise folgende Verbindungen verwenden:
[(MeO)₃Si(CH₂)₃]₂S₂, [(MeO)₃Si(CH₂)₃]₂S₃, [(MeO)₃Si(CH₂)₃]₂S₄,
[(MeO)₃Si(CH₂)₃]₂S₅, [(MeO)₃Si(CH₂)₃]₂S₆, [(MeO)₃Si(CH₂)₃]₂S₇,
[(MeO)₃Si(CH₂)₃]₂S₈, [(MeO)₃Si(CH₂)₃]₂S₉, [(MeO)₃Si(CH₂)₃]₂S₁₀,
[(MeO)₃Si(CH₂)₃]₂S₁₁, [(MeO)₃Si(CH₂)₃]₂S₁₂, [(EtO)₃Si(CH₂)₃]₂S₂,
[(EtO)₃Si(CH₂)₃]₂S₃, [(EtO)₃Si(CH₂)₃]₂S₄, [(EtO)₃Si(CH₂)₃]₂S₅,
[(EtO)₃Si(CH₂)₃]₂S₆, [(EtO)₃Si(CH₂)₃]₂S₇, [(EtO)₃Si(CH₂)₃]₂S₈,
[(EtO)₃Si(CH₂)₃]₂S₉, [(EtO)₃Si(CH₂)₃]₂S₁₀, [(EtO)₃Si(CH₂)₃]₂S1₁₁,
[(EtO)₃Si(CH₂)₃]₂S₁₂, [(EtO)₃Si(CH₂)₃]₂S₁₃, [(EtO)₃Si(CH₂)₃]₂S₁₄,
[(C₃H₇O)₃Si(CH₂)₃]₂S₂, [(C₃H₇O)₃Si(CH₂)₃]₂S₃,
[(C₃H₇O)₃Si(CH₂)₃]₂S₄, [(C₃H₇O)₃Si(CH₂)₃]₂S_{5,}
[(C₃H₇O)₃Si(CH₂)₃]₂S₆, [(C₃H₇O)₃Si(CH₂)₃]₂S₇,
[(C₃H₇O)₃Si(CH₂)₃]₂S₈, [(C₃H₇O)₃Si(CH₂)₃]₂S₉,
[(C₃H₇O)₃Si(CH₂)₃]₂S₁₀, [(C₃H₇O)₃Si(CH₂)₃]₂S₁₁,
[(C₃H₇O)₃Si(CH₂)₃]₂S₁₂, [(C₃H₇O)₃Si(CH₂)₃]₂S₁₃,
[(C₃H₇O)₃Si(CH₂)₃]₂S₁₄,
[(C₁₂H₂₅O)(EtO)₂Si(CH₂)₃]Sₓ[(CH₂)₃Si(OEt)₃],
[(C₁₂H₂₅O)₂(EtO)Si(CH₂)₃]Sₓ[(CH₂)₃Si(OEt)₃],
[(C₁₂H₂₅O)₃Si(CH₂)₃]Sₓ[(CH₂)₃Si(OEt)₃],
[(C₁₂H₂₅O)(EtO)₂Si(CH₂)₃]Sₓ[(CH₂)₃Si(C₁₂H₂₅O) (OEt)₂],
[(C₁₂H₂₅O)₂(EtO)Si(CH₂)₃]Sₓ[(CH₂)₃Si(C₁₂H₂₅O) (OEt)₂],
[(C₁₂H₂₅O)₃Si(CH₂)₃]Sₓ[(CH₂)₃Si(C₁₂H₂₅O) (OEt)₂],
[(C₁₂H₂₅O)(EtO)₂Si(CH₂)₃]Sₓ[(CH₂)₃Si(C₁₂H₂₅O)₂(OEt)],
[(C₁₂H₂₅O)₂(EtO)Si(CH₂)₃]Sₓ[(CH₂)₃Si(C₁₂H₂₅O)₂(OEt)],
[(C₁₂H₂₅O)₃Si(CH₂)₃]Sₓ[(CH₂)₃Si(C₁₂H₂₅O)₂(OEt)],
[(C₁₂H₂₅O)(EtO)₂Si(CH₂)₃]Sₓ[(CH₂)₃Si(C₁₂H₂₅O)₃],
[(C₁₂H₂₅O)₂(EtO)Si(CH₂)₃]Sₓ[(CH₂)₃Si(C₁₂H₂₅O)₃],
[(C₁₂H₂₅O)₃Si(CH₂)₃]Sₓ[(CH₂)₃Si(C₁₂H₂₅O)₃],
(C₁₄H₂₉O)(EtO)₂Si(CH₂)₃]Sₓ[(CH₂)₃Si(OEt)₃],
[(C₁₄H₂₉O)₂(EtO)Si(CH₂)₃]Sₓ[(CH₂)₃Si(OEt) ₃],
[(C₁₄H₂₉O)₃Si(CH₂)₃]Sₓ[(CH₂)₃Si(OEt)₃],
[(C₁₄H₂₉O)(EtO)₂Si(CH₂)₃]Sₓ[(CH₂)₃Si(C₁₄H₂₉O) (OEt)₂],
[(C₁₄H₂₉O)₂(EtO)Si(CH₂)₃]Sₓ[(CH₂)₃Si(C₁₉H₂₉O) (OEt)₂],
[(C₁₄H₂₉O)₃Si(CH₂)₃]Sₓ[(CH₂)₃Si(C₁₄H₂₉O) (OEt)₂],
[(C₁₄H₂₉O)(EtO)₂Si(CH₂)₃]Sₓ[(CH₂)₃Si(C₁₄H₂₉O)₂(OEt)],
[(C₁₄H₂₉O)₂(EtO)Si(CH₂)₃]Sₓ[(CH₂)₃Si(C₁₄H₂₉O)₂(OEt)],
[(C₁₄H₂₉O)₃Si(CH₂)₃]Sₓ[(CH₂)₃Si(C₁₄H₂₉O)₂(OEt)],
[(C₁₄H₂₉O)(EtO)₂Si(CH₂)₃]Sₓ[(CH₂)₃Si(C₁₄H₂₉O)₃],
[(C₁₄H₂₉O)₂(EtO)Si(CH₂)₃]Sₓ[(CH₂)₃Si(C₁₄H₂₉O)₃],
[(C₁₄H₂₉O)₃Si(CH₂)₃]Sₓ[(CH₂)₃Si(C₁₄H₂₉O)₃],
[(C₁₆H₃₃O)(EtO)₂Si(CH₂)₃]Sₓ[(CH₂)₃Si(OEt)₃],
[(C₁₆H₃₃O)₂(EtO)Si(CH₂)₃]Sₓ[(CH₂)₃Si(OEt)₃],
[(C₁₆H₃₃O)₃Si(CH₂)₃]Sₓ[(CH₂)₃Si(OEt)₃],
[(C₁₆H₃₃O)(EtO)₂Si(CH₂)₃]Sₓ[(CH₂)₃Si(C₁₆H₃₃O) (OEt)₂],
[(C₁₆H₃₃O)₂(EtO)Si(CH₂)₃]Sₓ(CH₂)₃Si(C₁₆H₃₃O) (OEt)₂],
[(C₁₆H₃₃O)₃Si(CH₂)₃]Sₓ[(CH₂)₃Si(C₁₆H₃₃O) (OEt)₂],
[(C₁₆H₃₃O)(EtO)₂Si(CH₂)₃]Sₓ[(CH₂)₃Si(C₁₆H₃₃O)₂(OEt)],
[(C₁₆H₃₃O)₂(EtO)Si(CH₂)₃]Sₓ[(CH₂)₃Si(C₁₆H₃₃O)₂(OEt)],
[(C₁₆H₃₃O)₃Si(CH₂)₃]Sₓ[(CH₂)₃Si(C₁₆H₃₃O)₂(OEt)],
[(C₁₆H₃₃O)(EtO)₂Si(CH₂)₃]Sₓ[(CH₂)₃Si(C₁₆H₃₃O)₃],
[(C₁₆H₃₃O)₂(EtO)Si(CH₂)₃]Sₓ[(CH₂)₃Si(C₁₆H₃₃O)₃],
[(C₁₆H₃₃O)₃Si(CH₂)₃]Sₓ(CH₂)₃Si(C₁₆H₃₃O)₃],
[(C₁₈H₃₇O)(EtO)₂Si(CH₂)₃]Sₓ[(CH₂)₃Si(OEt)₃],
[(C₁₈H₃₇O)₂(EtO)Si(CH₂)₃]Sₓ[(CH₂)₃Si(OEt)₃],
[(C₁₈H₃₇O)₃Si(CH₂)₃]Sₓ[(CH₂)₃Si(OEt)₃],
[(C₁₈H₃₇O)(EtO)₂Si(CH₂)₃]Sₓ[(CH₂)₃Si(C₁₈H₃₇O (OEt)₂],
[(C₁₈H₃₇O)₂(EtO)Si(CH₂)₃]Sₓ[(CH₂)₃Si(C₁₈H₃₇O) (OEt)₂],
[(C₁₈H₃₇O)₃Si(CH₂)₃]Sₓ[(CH₂)₃Si(C₁₈H₃₇O) (OEt)₂],
[(C₁₈H₃₇O)(EtO)₂Si(CH₂)₃]Sₓ[(CH₂)₃Si(C₁₈H₃₇O)₂(OEt)],
[(C₁₈H₃₇O)₂(EtO)Si(CH₂)₃]Sₓ(CH₂)₃Si(C₁₈H₃₇O)₂(OEt)],
[(C₁₈H₃₇O)₃Si(CH₂)₃]Sₓ[(CH₂)₃Si(C₁₈H₃₇O)₂(OEt)],
[(C₁₈H₃₇O)(EtO)₂Si(CH₂)₃]Sₓ[(CH₂)₃Si(C₁₈H₃₇O)₃],
[(C₁₈H₃₇O)₂(EtO)Si(CH₂)₃]Sₓ[(CH₂)₃Si(C₁₈H₃₇O)₃] oder
[(C₁₈H₃₇O)₃Si(CH₂)₃]Sₓ[(CH₂)₃Si(C₁₈H₃₇O)₃].

Das Bis(alkoxysilylorganyl)polysulfid kann eine Mischung aus verschiedenen Bis(alkoxysilylorganyl)polysulfiden der Formel I sein und eine mittlere Zusammensetzung von x=1 bis 14, vorzugsweise x=1 bis 8, besonders bevorzugt x=2 bis 2,8, haben. Eine kurze Schwefelkette kann bevorzugt sein, da sie bei der Reaktion mit H₂ weniger gasförmiges Nebenprodukt bildet.
Als Bis(alkoxysilylorganyl)polysulfid kann Si 266, Si 266/2 Si 261, Si 75 und Si 69 der Degussa AG, Silquest A 1589, Silquest A 1289 oder Silquest A 15304 der General Electric-Osi, KBE 846 oder KBE 856 der Shin-Etsu Chemical Co. Ltd., Cabrus 4, Cabrus 2A oder Cabrus 2B der Daiso Co. Ltd. oder HP 669 oder HP 1589 der Hung Pai Chemical Company eingesetzt werden.

Das Bis(alkoxysilyl)polysulfid kann herstellungsbedingt 0,01 bis 5 Gew.-% 3-Chlororganyl(alkoxysilan) enthalten.

Das Bis(alkoxysilyl)polysulfid kann herstellungsbedingt 0,001 bis 1 Gew.-% elementaren Schwefel enthalten.

Das Bis(alkoxysilyl)polysulfid kann herstellungsbedingt 0,001 bis 1 Gew.-% Alkohol enthalten.

Das gebildete Mercaptoorganyl(alkoxysilan) kann eine Verbindung der allgemeinen Formel (II)

Z-A-SH (II)

sein, wobei Z und A, jeweils unabhängig voneinander, die Bedeutung gemäß Formel (I) haben.

Die Gruppe Z kann in Formel II vorzugsweise -Si(OMe)₃, -Si(OMe)₂OH, -Si(OMe)(OH)₂, -Si(OEt)₃, -Si(OEt)₂OH,-Si(OEt)(OH)₂, -SiMe(OMe)₂, -SiMe(OEt)₂), -SiMe(OH)₂,-SiMe₂(OMe), -SiMe₂(OEt), -SiMe₂(OH), -Si[-O(CO)CH₃]₃,-Si(OC₁₂H₂₅)₃, -Si(OC₁₄H₂₉)₃, -Si(OC₁₆H₃₃) ₃, -Si(OC₁₈H₃₇)₃,-Si(OC₁₄H₂₉)₂(OC₁₆H₃₃), -Si(OC₁₄H₂₉)₂(OC₁₈H₃₇),-Si(OC₁₆H₃₃)₂(OC₁₄H₂₉), -Si(OC₁₆H₃₃)₂(OC₁₈H₃₇),-Si(OC₁₈H₃₇)₂(OC₁₆H₃₃), -Si(OC₁₄H₂₉) (OC₁₈H₃₇)₂ oder -Si(OCH₂-CH₂-)₃N sein.

Das gebildete Mercaptoorganyl(alkoxysilan) kann eine Mischung von Verbindungen der allgemeinen Formel (II) sein.

Beispielsweise können Mercaptoorganyl(alkoxysilane) der allgemeinen Formel (II) sein:
3-Mercaptopropyl(trimethoxysilan),
3-Mercaptopropyl(dimethoxyhydroxysilan),
3-Mercaptopropyl (triethoxysilan),
3-Mercaptopropyl(diethoxyhydroxysilan),
3-Mercaptopropyl(diethoxymethoxysilan),
3-Mercaptopropyl(tripropoxysilan),
3-Mercaptopropyl(dipropoxymethoxysilan),
3-Mercaptopropyl(dipropoxyhydroxysilan),
3-Mercaptopropyl(tridodecanoxysilan),
3-Mercaptopropyl(didodecanoxyhydroxysilan),
3-Mercaptopropyl(tritetradecanoxysilan),
3-Mercaptopropyl(trihexadecanoxysilan),
3-Mercaptopropyl(trioctadecanoxysilan),
3-Mercaptopropyl(didodecanoxy)tetradecanoxysilan,
3-Mercaptopropyl(dodecanoxy)tetradecanoxy(hexadecanoxy)sila n,

3-Mercaptopropyl(dimethoxymethylsilan),
3-Mercaptopropyl (methoxymethylhydroxysilan),
3-Mercaptopropyl(methoxydimethylsilan),
3-Mercaptopropyl(hydroxydimethylsilan),
3-Mercaptopropyl(diethoxymethylsilan),
3-Mercaptopropyl(ethoxyhydroxymethylsilan),
3-Mercaptopropyl(ethoxydimethylsilan),

3-Mercaptopropyl(dipropoxymethylsilan),
3-Mercaptopropyl(propoxymethylhydroxysilan),
3-Mercaptopropyl(propoxydimethylsilan),
3-Mercaptopropyl(diisopropoxymethylsilan),
3-Mercaptopropyl(isopropoxydimethylsilan),
3-Mercaptopropyl(dibutoxymethylsilan),
3-Mercaptopropyl(butoxydimethylsilan),
3-Mercaptopropyl(disiobutoxymethylsilan),
3-Mercaptopropyl(siobutoxymethylhydroxysilan),
3-Mercaptopropyl(isobutoxydimethylsilan),
3-Mercaptopropyl(didodecanoxymethylsilan),
3-Mercaptopropyl(dodecanoxydimethylsilan),
3-Mercaptopropyl(ditetradecanoxymethylsilan),
3-Mercaptopropyl(tetradecanoxymethylhydroxysilan),
3-Mercaptopropyl(tetradecanoxydimethylsilan),

2-Mercaptoethyl(trimethoxysilan),
2-Mercaptoethyl(triethoxysilan),
2-Mercaptoethyl(diethoxymethoxysilan),
2-Mercaptoethyl(tripropoxysilan),
2-Mercaptoethyl(dipropoxymethoxysilan),
2-Mercaptoethyl(tridodecanoxysilan),
2-Mercaptoethyl(tritetradecanoxysilan),
2-Mercaptoethyl(trihexadecanoxysilan),
2-Mercaptoethyl(trioctadecanoxysilan),
2-Mercaptoethyl(didodecanoxy)tetradecanoxysilan,
2-Mercaptoethyl(dodecanoxy)tetradecanoxy(hexadecanoxy) silan,

2-Mercaptoethyl(dimethoxymethylsilan),
2-Mercaptoethyl(methoxymethylhydroxysilan),
2-Mercaptoethyl(methoxydimethylsilan),
2-Mercaptoethyl(diethoxymethylsilan),
2-Mercaptoethyl(ethoxydimethylsilan),
2-Mercaptoethyl(hydroxydimethylsilan),

1-Mercaptomethyl (trimethoxysilan),
1-Mercaptomethyl(triethoxysilan),
1-Mercaptomethyl(diethoxymethoxysilan),
1-Mercaptomethyl(diethoxyhydroxysilan),
1-Mercaptomethyl(dipropoxymethoxysilan),
1-Mercaptomethyl(tripropoxysilan),
1-Mercaptomethyl(trimethoxysilan),
1-Mercaptomethyl(dimethoxymethylsilan),
1-Mercaptomethyl(methoxydimethylsilan),
1-Mercaptomethyl(diethoxymethylsilan),
1-Mercaptomethyl(ethoxymethylhydroxysilan),
1-Mercaptomethyl(ethoxydimethylsilan),

3-Mercaptobutyl(trimethoxysilan),
3-Mercaptobutyl(triethoxysilan),
3-Mercaptobutyl(diethoxymethoxysilan),
3-Mercaptobutyl(tripropoxysilan),
3-Mercaptobutyl(dipropoxymethoxysilan),
3-Mercaptobutyl(dimethoxymethylsilan),
3-Mercaptobutyl(diethoxymethylsilan),
3-Mercaptobutyl(dimethylmethoxysilan),
3-Mercaptobutyl(dimethylethoxysilan),
3-Mercaptobutyl(dimethylhydroxysilan),
3-Mercaptobutyl(tridodecanoxysilan),
3-Mercaptobutyl(tritetradecanoxysilan),
3-Mercaptobutyl(trihexadecanoxysilan),
3-Mercaptobutyl(didodecanoxy)tetradecanoxysilan,
3-Mercaptobutyl(dodecanoxy)tetradecanoxy(hexadecanoxy) silan,

3-Mercapto-2-methyl-propyl(trimethoxysilan),
3-Mercapto-2-methyl-propyl(triethoxysilan),

3-Mercapto-2-methyl-propyl(diethoxymethoxysilan),
3-Mercapto-2-methyl-propyl(tripropoxysilan),
3-Mercapto-2-methyl-propyl(dipropoxymethoxysilan),
3-Mercapto-2-methyl-propyl(tridodecanoxysilan),
3-Mercapto-2-methyl-propyl(tritetradecanoxysilan),
3-Mercapto-2-methyl-propyl(trihexadecanoxysilan),
3-Mercapto-2-methyl-propyl(trioctadecanoxysilan),
3-Mercapto-2-methyl-propyl(didodecanoxy) tetradecanoxysilan,
3-Mercapto-2-methyl-propyl(dodecanoxy)tetradecanoxy-(hexadecanoxy)silan,
3-Mercapto-2-methyl-propyl(dimethoxymethylsilan),
3-Mercapto-2-methyl-propyl(methoxydimethylsilan),
3-Mercapto-2-methyl-propyl(diethoxymethylsilan),
3-Mercapto-2-methyl-propyl(ethoxydimethylsilan),
3-Mercapto-2-methyl-propyl(hydroxydimethylsilan),
3-Mercapto-2-methyl-propyl(dipropoxymethylsilan),
3-Mercapto-2-methyl-propyl(propoxydimethylsilan),
3-Mercapto-2-methyl-propyl(diisopropoxymethylsilan),
3-Mercapto-2-methyl-propyl(isopropoxydimethylsilan),
3-Mercapto-2-methyl-propyl(dibutoxymethylsilan),
3-Mercapto-2-methyl-propyl(butoxydimethylsilan),
3-Mercapto-2-methyl-propyl(disiobutoxymethylsilan),
3-Mercapto-2-methyl-propyl(isobutoxydimethylsilan),
3-Mercapto-2-methyl-propyl(didodecanoxymethylsilan),
3-Mercapto-2-methyl-propyl(dodecanoxydimethylsilan),
3-Mercapto-2-methyl-propyl(ditetradecanoxymethylsilan) oder
3-Mercapto-2-methyl-propyl(tetradecanoxydimethylsilan).

[(C₉H₁₉O-(CH₂-CH₂O)₂](MeO)₂Si(CH₂)₃SH,
[(C₉H₁₉O-(CH₂-CH₂O)₃](MeO)₂Si(CH₂)₃SH,
[(C₉H₁₉O-(CH₂-CH₂O)₄](MeO)₂Si(CH₂)₃SH,
[(C₉H₁₉O-(CH₂-CH₂O)₅](MeO)₂Si(CH₂)₃SH,
[(C₉H₁₉O-(CH₂-CH₂O)₆](MeO)₂Si(CH₂)₃SH,

[(C₁₂H₂₅O-(CH₂-CH₂O)₂](MeO)₂SiCH₂)₃SH,
[(C₁₂H₂₅O-(CH₂-CH₂O)₃](MeO)₂Si(CH₂)₃SH,
[(C₁₂H₂₅O-(CH₂-CH₂O)₄](MeO)₂Si(CH₂)₃SH,
[(C₁₂H₂₅O-(CH₂-CH₂O)₅](MeO)₂Si(CH₂)₃SH,
[(C₁₂H₂₅O-(CH₂-CH₂O)₆](MeO)₂Si(CH₂)₃SH,

[(C₁₃H₂₇O-(CH₂-CH₂O)₂](MeO)₂Si(CH₂)₃SH,
[(C₁₃H₂₇O-(CH₂-CH₂O)₃](MeO)₂Si(CH₂)₃SH,
[(C₁₃H₂₇O-(CH₂-CH₂O)₄](MeO)₂SiCH₂)₃SH,
[(C₁₃H₂₇O-(CH₂-CH₂O)₅](MeO)₂Si(CH₂)₃SH,
[(C₁₃H₂₇O-(CH₂-CH₂O)₆](MeO)₂Si(CH₂)₃SH,

[(C₁₄H₂₉O-(CH₂-CH₂O)₂](MeO)₂Si(CH₂)₃SH,
[(C₁₄H₂₉O-(CH₂-CH₂O)₃](MeO)₂Si(CH₂)₃SH,
[(C₁₄H₂₉O-(CH₂-CH₂O)₄](MeO)₂Si(CH₂)₃SH,
[(C₁₄H₂₉O-(CH₂-CH₂O)₅](MeO)₂Si(CH₂)₃SH,
[(C₁₄H₂₉O-(CH₂-CH₂O)₆](MeO)₂Si(CH₂)₃SH,

[(C₉H₁₉O-(CH₂-CH₂O)₂]₂(MeO)Si(CH₂)₃SH,
[(C₉H₁₉O-(CH₂-CH₂O)₃]₂(MeO)Si(CH₂)₃SH,
[(C₉H₁₉O-(CH₂-CH₂O)₄]₂(MeO)Si(CH₂)₃SH,
[(C₉H₁₉O-(CH₂-CH₂O)₅]₂(MeO)Si(CH₂)₃SH,
[(C₉H₁₉O-(CH₂-CH₂O)₆]₂(MeO)Si(CH₂)₃SH,

[(C₁₂H₂₅O-(CH₂-CH₂O)₂]₂(MeO)Si(CH₂)₃SH,
[(C₁₂H₂₅O-(CH₂-CH₂O)₃]₂(MeO)Si(CH₂)₃SH,
[(C₁₂H₂₅O-(CH₂-CH₂O)₄]₂(MeO)Si(CH₂)₃SH,
[(C₁₂H₂₅O-(CH₂-CH₂O)₅]₂(MeO)Si(CH₂)₃SH,
[(C₁₂H₂₅O-(CH₂-CH₂O)₆]₂(MeO)Si(CH₂)₃SH,

[(C₁₃H₂₇O-(CH₂-CH₂O)₂]₂(MeO)Si(CH₂)₃SH,
[(C₁₃H₂₇O-(CH₂-CH₂O)₃]₂(MeO)Si(CH₂)₃SH,
[(C₁₃H₂₇O-(CH₂-CH₂O)₄]₂(MeO)Si(CH₂)₃SH,
[(C₁₃H₂₇O-(CH₂-CH₂O)₅]₂(MeO)Si(CH₂)₃SH,
[(C₁₃H₂₇O-(CH₂-CH₂O)₆]₂(MeO)Si(CH₂)₃SH,

[(C₁₄H₂₉O-(CH₂-CH₂O)₂]₂(MeO)Si(CH₂)₃SH,
[(C₁₄H₂₉O-(CH₂-CH₂O)₃]₂(MeO)Si(CH₂)₃SH,
[(C₁₄H₂₉O-(CH₂-CH₂O)₄]₂(MeO)Si(CH₂)₃SH,
[(C₁₄H₂₉O-(CH₂-CH₂O)₅]₂(MeO)Si(CH₂)₃SH,
[(C₁₄H₂₉O-(CH₂-CH₂O)₆]₂(MeO)Si(CH₂)₃SH,

[(C₉H₁₉O-(CH₂-CH₂O)₂](EtO)₂Si(CH₂)₃SH,
[(C₉H₁₉O-(CH₂-CH₂O)₃](EtO)₂Si(CH₂)₃SH,
[(C₉H₁₉O-(CH₂-CH₂O)₄](EtO)₂Si(CH₂)₃SH,
[(C₉H₁₉O-(CH₂-CH₂O)₅](EtO)₂Si(CH₂)₃SH,
[(C₉H₁₉O-(CH₂-CH₂O)₆](EtO)₂Si(CH₂)₃SH,

[(C₁₂H₂₅O-(CH₂-CH₂O)₂](EtO)₂Si(CH₂)₃SH,
(C₁₂H₂₅O-(CH₂-CH₂O)₃](EtO)₂Si(CH₂)₃SH,
[(C₁₂H₂₅O-(CH₂-CH₂O)₄](EtO)₂Si(CH₂)₃SH,
[(C₁₂H₂₅O-(CH₂-CH₂O)₅](EtO)₂Si(CH₂)₃SH,
[(C₁₂H₂₅O-(CH₂-CH₂O)₆](EtO)₂Si(CH₂)₃SH,

(C₁₃H₂₇O-(CH₂-CH₂O)₂](EtO)₂Si(CH₂)₃SH,
[(C₁₃H₂₇O-(CH₂-CH₂O)₃](EtO)₂Si(CH₂)₃SH,
[(C₁₃H₂₇O-(CH₂-CH₂O)₄](EtO)₂Si(CH₂)₃SH,
[(C₁₃H₂₇O-(CH₂-CH₂O)₅](EtO)₂Si(CH₂)₃SH,
[(C₁₃H₂₇O-(CH₂-CH₂O)₆](EtO)₂Si(CH₂)₃SH,

[(C₁₄H₂₉O-(CH₂-CH₂O)₂](EtO)₂Si(CH₂)₃SH,
[(C₁₄H₂₉O-(CH₂-CH₂O)₃](EtO)₂Si(CH₂)₃SH,
[(C₁₉H₂₉O-(CH₂-CH₂O)₄](EtO)₂Si(CH₂)₃SH,
[(C₁₄H₂₉O-(CH₂-CH₂O)₅](EtO)₂Si(CH₂)₃SH,
[(C₁₄H₂₉O-(CH₂-CH₂O)₆](EtO)₂Si(CH₂)₃SH,

[(C₉H₁₉O-(CH₂-CH₂O)₂]₂(EtO)Si(CH₂)₃SH,
[(C₉H₁₉O-(CH₂-CH₂O)₃]₂(EtO)Si(CH₂)₃SH,
[(C₉H₁₉O-(CH₂-CH₂O)₄]₂(EtO)Si(CH₂)₃SH,
[(C₉H₁₉O-(CH₂-CH₂O)₅]₂(EtO)Si(CH₂)₃SH,
[(C₉H₁₉O-(CH₂-CH₂O)₆]₂(EtO)Si(CH₂)₃SH,
[(C₁₂H₂₅O-(CH₂-CH₂O)₂]₂(EtO)Si(CH₂)₃SH,
[(C₁₂H₂₅O-(CH₂-CH₂O)₃]₂(EtO)Si(CH₂)₃SH,
[(C₁₂H₂₅O-(CH₂-CH₂O)₄]₂(EtO)Si(CH₂)₃SH,
[(C₁₂H₂₅O-(CH₂-CH₂O)₅]₂(EtO)Si(CH₂)₃SH,
[(C₁₂H₂₅O-(CH₂-CH₂O)₆]₂(EtO)Si(CH₂)₃SH,

[(C₁₃H₂₇O-(CH₂-CH₂O)₂]₂(EtO)Si(CH₂)₃SH,
[(C₁₃H₂₇O-(CH₂-CH₂O)₃]₂(EtO)Si(CH₂)₃SH,
(C₁₃H₂₇O-(CH₂-CH₂O)₄]₂(EtO)Si(CH₂)₃SH,
[(C₁₃H₂₇O-(CH₂-CH₂O)₅]₂(EtO)Si(CH₂)₃SH,
[(C₁₃H₂₇O-(CH₂-CH₂O)₆]₂(EtO)Si(CH₂)₃SH,

[(C₁₄H₂₉O-(CH₂-CH₂O)₂]₂(EtO)Si(CH₂)₃SH,
[(C₁₄H₂₉O-(CH₂-CH₂O)₃]₂(EtO)Si(CH₂)₃SH,
[(C₁₄H₂₉O-(CH₂-CH₂O)₄]₂(EtO)Si(CH₂)₃SH,
[(C₁₄H₂₉O-(CH₂-CH₂O)₅]₂(EtO)Si(CH₂)₃SH,
[(C₁₄H₂₉O-(CH₂-CH₂O)₆]₂(EtO)Si(CH₂)₃SH,

[(C₉H₁₉O-(CH₂-CH₂O)₂]₃Si(CH₂)₃SH,
[(C₉H₁₉O-(CH₂-CH₂O)₃]₃Si(CH₂)₃SH,
[(C₉H₁₉O-(CH₂-CH₂O)₄]₃Si(CH₂)₃SH,
[(C₉H₁₉O-(CH₂-CH₂O)₅]₃Si(CH₂)₃SH,
[(C₉H₁₉O-(CH₂-CH₂O)₆]₃Si(CH₂)₃SH,

[(C₁₂H₂₅O-(CH₂-CH₂O)₂]₃Si(CH₂)₃SH,
[(C₁₂H₂₅O-(CH₂-CH₂O)₃]₃Si(CH₂)₃SH,
[(C₁₂H₂₅O-(CH₂-CH₂O)₄]₃Si(CH₂)₃SH,
[(C₁₂H₂₅O-(CH₂-CH₂O)₅]₃Si(CH₂)₃SH,
[(C₁₂H₂₅O-(CH₂-CH₂O)₆]₃Si(CH₂)₃SH,

(C₁₃H₂₇O-(CH₂-CH₂O)₂]₃Si(CH₂)₃SH,
[(C₁₃H₂₇O-(CH₂-CH₂O)₃]₃Si(CH₂)₃SH,
(C₁₃H₂₇O-(CH₂-CH₂O)₄]₃Si(CH₂)₃SH,
[(C₁₃H₂₇O-(CH₂-CH₂O)₅]₃Si(CH₂)₃SH,
[(C₁₃H₂₇O-(CH₂-CH₂O)₆]₃Si(CH₂)₃SH,

[(C₁₄H₂₉O-(CH₂-CH₂O)₂]₃Si(CH₂)₃SH,
[(C₁₄H₂₉O-(CH₂-CH₂O)₃]₃Si(CH₂)₃SH,
[(C₁₄H₂₉O-(CH₂-CH₂O)₄]₃Si(CH₂)₃SH,
(C₁₄H₂₉O-(CH₂-CH₂O)₅]₃Si(CH₂)₃SH,
[(C₁₄H₂₉O-(CH₂-CH₂O)₆]₃Si(CH₂)₃SH oder
HS-CH₂-CH₂-CH₂-Si(OCH₂-CH₂-)₃N.

Die Hydrierung kann bei einem Wasserstoffdruck von 1 bis 99 bar, bevorzugt 1 bis 80 bar, besonders bevorzugt 1 bis 49 bar, ganz besonders bevorzugt 1 bis 35 bar, Überdruck durchgeführt werden.

Die Hydrierung kann bei einer Temperatur von 100 bis 185°C, bevorzugt 105 bis 175°C, besonders bevorzugt 110 bis 165°C, ganz besonders bevorzugt 120 bis 155°C, durchgeführt werden.

Die Reaktionszeit für die vollständige Hydrierung kann weniger als 300 min, bevorzugt weniger als 270 min, besonders bevorzugt weniger als 240 min, ganz besonders bevorzugt weniger als 210 min, betragen.

Es können dem Reaktionsgemisch vor, während oder am Ende der Reaktion Additive zugesetzt werden.

Die Additive können eine Verlängerung der Standzeit der verwendeten Katalysatoren bewirken. Die Additive können eine einfachere oder verbesserte Handhabung der verwendeten Katalysatoren bewirken. Die Additive können die Wiederverwendbarkeit der verwendeten Katalysatoren erhöhen. Die Additive können die Wirtschaftlichkeit des Verfahrens verbessern.

Additive können schwefelorganische Verbindungen, Titanalkoxylate, Amine, organische bzw. anorganische Säuren oder Basen oder deren Gemische sein.

Additive können Carbonsäuren, DMSO, Monoalkylamine, Dialkylamine oder Trialkylamine sein. Additive können Ti(OC₄H₉)4 oder Ti(OC₃H₇)₄ sein.

Der Übergangsmetallkatalysator kann ein Katalysator sein, dessen katalytisch aktive Komponente aus Nickel, Cobalt, Rhodium, Ruthenium, Palladium, Iridium oder Platin besteht.

Die katalytisch aktive Komponente kann zusätzlich dotiert sein bzw. zusätzliche Komponenten, wie beispielsweise

Alkalimetalle, bevorzugt Li, Na, K oder Rb, Erdalkalimetalle, bevorzugt Be, Mg, Ca, Sr oder Ba, Elemente der 3. Hauptgruppe, bevorzugt B, Al, Ga oder In, Elemente der 4. Hauptgruppe, bevorzugt C, Si, Ge, Sn oder Pb, Elemente der 5. Hauptgruppe, bevorzugt N, P, As oder Sb, Elemente der 6. Hauptgruppe, bevorzugt O, S, Se oder Te, Elemente der 7. Hauptgruppe, bevorzugt F, Cl, Br oder I, oder Nebengruppenelemente, bevorzugt Sc, Y, Ti, Zr, Hf, V, Nb, Ta, Cr, Mo, W, Mn, Re, Fe, Ru, Co, Rh, Ir, Ni, Pd, Pt, Cu, Ag, Au, Zn oder Cd, enthalten.

Bevorzugte Dotierungskomponente kann ein Hydrid, Oxid, Halogenid, beispielsweise Fluorid, Chlorid, Bromid oder Iodid, Sulfid oder Nitrid sein.

Die dotierten Übergangsmetallkatalysatoren können bevorzugt, als Dotierungskomponente Hydride, Oxide, '

Halogenide, Sulfide und/oder Nitride von Fe, Ni, Ru, Rh, Pd, Os oder Ir enthalten.
Die dotierten Übergangsmetallkatalysatoren können poröse Skelettkatalysatoren vom Raney-Typ sein, die mit Übergangsmetallen und/oder Übergangsmetallverbindungen, beispielsweise Molybdän, dotiert sind.
Die dotierten Übergangsmetallkatalysatoren können poröse, aktivierte Metallkatalysatoren vom Raney-Typ sein, die mit Übergangsmetallen und/oder Übergangsmetallverbindungen, beispielsweise Molybdän, dotiert sind. Die dotierten Übergangsmetallkatalysatoren können bevorzugt aktivierte Nickelmetallkatalysatoren vom Raney-Typ sein, die mit Übergangsmetallen und/oder Übergangsmetallverbindungen, beispielsweise Molybdän, dotiert sind.

Der Gewichtsanteil der Dotierungskomponente (elementar oder als chemische Verbindung vorliegend) kann, bezogen auf das Gewicht des dotierten Übergangsmetallkatalysatoren, 0,00001 bis 80 Gew.-%, bevorzugt 0,0001 bis 50 Gew.-%, besonders bevorzugt 0,001 bis 15 Gew.-%, ganz besonders bevorzugt 0,01 bis 7,5 Gew.-%, betragen.

Die katalytisch aktive Komponente kann auf einem der bekannten und üblichen Katalysator-Trägermaterialien, wie beispielsweise Diatomeenerde, Kohlenstoff, Aktivkohle, Kieselsäure, Kieselguhr, Tonerde oder Alumosilicat, aufgebracht sein.

Die katalytisch aktive Komponente kann aus einem feinverteilten, ungeträgerten, aktivierten Metall bestehen. Das aktivierte, ungeträgerte Metall kann als Feststoff, in Suspension oder eingebettet in Wachse oder Öle eingesetzt werden.

Die Katalysatorkonzentration bezogen auf das katalytisch aktive Metall kann 0,0001 bis 1 mmol pro 1 g Bis(alkoxysilylorganyl)polysulfid betragen.
Vorzugsweise kann für Cobalt als aktives Metall die Katalysatorkonzentration bezogen auf das katalytisch aktive Metall von 0,001 bis 1 mmol, besonders bevorzugt 0,008 bis 0,5 mmol, ganz besonders bevorzugt 0,01 bis 0,1 mmol, pro 1 g Bis(alkoxysilylorganyl)polysulfid betragen.
Vorzugsweise kann für Nickel als aktives Metall die Katalysatorkonzentration bezogen auf das katalytisch aktive Metall von 0,001 bis 1 mmol, besonders bevorzugt 0,01 bis 1 mmol, ganz besonders bevorzugt 0,1 bis 0,9 mmol, pro 1 g Bis(alkoxysilylorganyl)polysulfid betragen.

Vorzugsweise kann für Ruthenium als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,3 mmol, pro 1 g Bis(alkoxysilylorganyl)polysulfid betragen.

Vorzugsweise kann für Rhodium als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Vorzugsweise kann für Palladium als aktives Metall die Katalysatorkonzentration bezogen auf das katalytisch aktive Metall von 0,001 bis 1 mmol, besonders bevorzugt 0,005 bis 1 mmol, ganz besonders bevorzugt 0,05 bis 0,3 mmol, pro 1 g Bis(alkoxysilylorganyl)polysulfid betragen.

Vorzugsweise kann für Iridium als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Vorzugsweise kann für Platin als aktives Metall die Katalysatorkonzentration bezogen auf das katalytisch aktive Metall von 0,001 bis 1 mmol, besonders bevorzugt 0,005 bis 0,5 mmol, ganz besonders bevorzugt 0,005 bis 0,1 mmol, pro 1 g Bis(alkoxysilylorganyl)polysulfid betragen.

Als Parameter für den Vergleich der Geschwindigkeit der Hydrogenolyse bei einer gegebenen Temperatur T und einem konstanten Druck p kann der durch die Beziehung "Umsatz an Edukt" pro "mmol Katalysatormetall" pro "Minute" quantitativ ausdrückbare Umsatz dienen.

Der Umsatz kann 0,001 bis 10 g Bis(alkoxysilylorganyl)polysulfid pro 1 mmol katalytisch aktives Metall pro Minute betragen.

Vorzugsweise kann für Cobalt als aktives Metall der Umsatz 0,001 bis 10 g, besonders bevorzugt 0,01 bis 10 g, ganz besonders bevorzugt 0,1 bis 5 g, Bis(alkoxysilylorganyl)polysulfid pro 1 mmol katalytisch aktives Metall pro Minute betragen.

Vorzugsweise kann für Nickel als aktives Metall der Umsatz 0,001 bis 10 g, besonders bevorzugt 0,01 bis 10 g, ganz besonders bevorzugt 0,1 bis 5 g, Bis(alkoxysilylorganyl)polysulfid pro 1 mmol katalytisch aktives Metall pro Minute betragen.

Vorzugsweise kann für Ruthenium als aktives Metall der Umsatz 0,01 bis 10 g, besonders bevorzugt 0,1 bis 5 g, ganz besonders bevorzugt 0,2 bis 2 g, Bis(alkoxysilylorganyl)polysulfid pro 1 mmol katalytisch aktives Metall pro Minute betragen.

Vorzugsweise kann für Rhodium als aktives Metall der Umsatz 0,001 bis 10 g, besonders bevorzugt 0,1 bis 5 g, ganz besonders bevorzugt 0,2 bis 3 g, Bis(alkoxysilylorganyl)polysulfid pro 1 mmol katalytisch aktives Metall pro Minute betragen.

Vorzugsweise kann für Palladium als aktives Metall der Umsatz 0,001 bis 10 g, besonders bevorzugt 0,11 bis 5 g, ganz besonders bevorzugt 0,15 bis 3 g, Bis(alkoxysilylorganyl)polysulfid pro 1 mmol katalytisch aktives Metall pro Minute betragen.

Vorzugsweise kann für Iridium als aktives Metall der Umsatz 0,01 bis 10 g, besonders bevorzugt 0,1 bis 5 g, ganz besonders bevorzugt 0,15 bis 3 g, Bis(alkoxysilylorganyl)polysulfid pro 1 mmol katalytisch aktives Metall pro Minute betragen.

Vorzugsweise kann für Platin als aktives Metall der Umsatz 0,01 bis 10 g, besonders bevorzugt 0,1 bis 5 g, ganz besonders bevorzugt 0,15 bis 3 g, Bis(alkoxysilylorganyl)polysulfid pro 1 mmol katalytisch aktives Metall pro Minute betragen.

Als Parameter für den Vergleich der Geschwindigkeit der Hydrogenolyse bei einer gegebenen Temperatur T und einem konstanten Druck p kann der durch die Beziehung "gebildetes Produkt in mmol" pro "katalytisch aktivem Metall" pro "Minute" quantitativ ausdrückbare molare Umsatz dienen.

Der molare Umsatz kann 0,001 bis 50 mmol Mercaptoorganyl-(alkoxysilan) pro 1 mmol katalytisch aktivem Metall pro Minute betragen.

Vorzugsweise kann für Eisen, Nickel, Cobalt, Ruthenium, Rhodium, Platin, Iridium oder Palladium enthaltende Übergangsmetallkatalysatoren der molare Umsatz 0,001 bis 50 mmol, bevorzugt 0,01 bis 40 mmol, besonders bevorzugt 0,05 bis 30 mmol, ganz besonders bevorzugt 0,1 bis 20 mmol, Mercaptoorganyl(alkoxysilan) pro 1 mmol enthaltenes Übergangsmetall der Gruppe VIII pro Minute betragen.

Mit dem erfindungsgemäßen Verfahren können mehr als 90 Gewichtsprozent, bevorzugt mehr als 92 Gewichtsprozent, besonders bevorzugt mehr als 94 Gewichtsprozent, ganz besonders bevorzugt mehr als 96 Gewichtsprozent, des eingesetzten Bis(alkoxysilylorganyl)polysulfids in ein Mercaptoorganyl(alkoxysilan) umgesetzt werden.

Mit dem erfindungsgemäßen Verfahren kann der relative Anteil (mol%) des enthaltenen Bis(alkoxysilylorganyl)monosulfids konstant bleiben.

Mit dem erfindungsgemäßen Verfahren kann der relative Anteil (mol%) des enthaltenen Bis(alkoxysilylorganyl)monosulfids zunehmen.

Mit dem erfindungsgemäßen Verfahren kann der relative Anteil (mol%.) des enthaltenen Bis(alkoxysilylorganyl)monosulfids abnehmen.

Bei dem erfindungsgemäßen Verfahren kann der relative Anteil des im Edukt enthaltenen Bis(alkoxysilylorganyl)monosulfids <10 Gew.-%, vorzugsweise <8 Gew.-%, besonders bevorzugt <6 Gew.-%, ganz besonders bevorzugt <4 Gew.-%, sein.

Bei dem erfindungsgemäßen Verfahren kann es sich um ein Batchverfahren oder um ein kontinuierliches Verfahren handeln.

Bei dem Batchverfahren kann es sich um ein Slurry-Verfahren oder Suspensionsverfahren, zum Beispiel in Rührautoklaven oder Buss-Reaktoren, handeln.

Bei den kontinuierlichen Verfahren kann es sich um ein Slurry-Verfahren mit kontinuierlicher Flüssigkeits- und Gaszufuhr handeln.

Bei dem kontinuierlichen Verfahren können bekannte Reaktoren für Gas/Flüssig/Fest-Reaktionen zum Einsatz kommen. Typische Vertreter für Festbettreaktoren sind der Riesel- und Sumpfreaktor, für Suspensionsreaktoren der Rührkessel, die Blasensäule und das Fließbett.

Die Umsätze sind, trotz der milderen, ressourcenschonenderen Reaktionsbedingungen, im Vergleich zu den bisher aus dem Stand der Technik bekannten Umsätzen für <100bar, besser oder zumindest gleich geblieben.

Eine negative Beeinträchtigung der Hydrierung durch den Verzicht auf Entgiftungsreagentien, wie Wasser, Alkohol und H₂S, ist nicht festzustellen.

Bei dem erfindungsgemäßen Verfahren kann eine höhere Aktivität gegenüber den bekannten Katalysatoren bei milderen Bedingungen erreicht werden. Es können Umsätze von bis zu 0,42 g Bis(alkoxysilylorganyl)polysulfid pro mmol Katalysatormetall pro Minute erhalten werden. Diese hohen Umsätze können überraschenderweise schon bei milderen Reaktionsbedingungen bezüglich Temperatur und Druck erhalten werden. Durch einen höheren Umsatz wird nicht nur die Raum-Zeit-Ausbeute erheblich verbessert, sondern auch der spezifische Energieverbrauch für die Herstellung von Mercaptoorganyl(alkoxysilanen) durch reduktive Spaltung mit H₂ aus Bis(alkoxysilylorganyl)polysulfiden verringert. Durch einen geringeren Energieverbrauch und mildere Reaktionsbedingungen wird die Anlage weniger beansprucht, es resultiert unter anderem ein geringerer Verschleiß. Durch einen geringeren Energieverbrauch bei der Herstellung von Mercaptoorganyl(alkoxysilanen) wird die Energiebilanz des Prozesses verbessert und die Umwelt geringer belastet.

### Beispiele:

In Tabelle 1 sind die Vergleichsbeispiele aus US 6,433,206 zusammengefaßt. Als Polysulfansilan wird ein nicht näher spezifiziertes Disulfansilan-Gemisch, daß hauptsächlich Bis(3-triethoxysilylprpyl)disulfid enthält, eingesetzt. Über Nebenproduktbildung oder Ahnliches wird nicht berichtet.

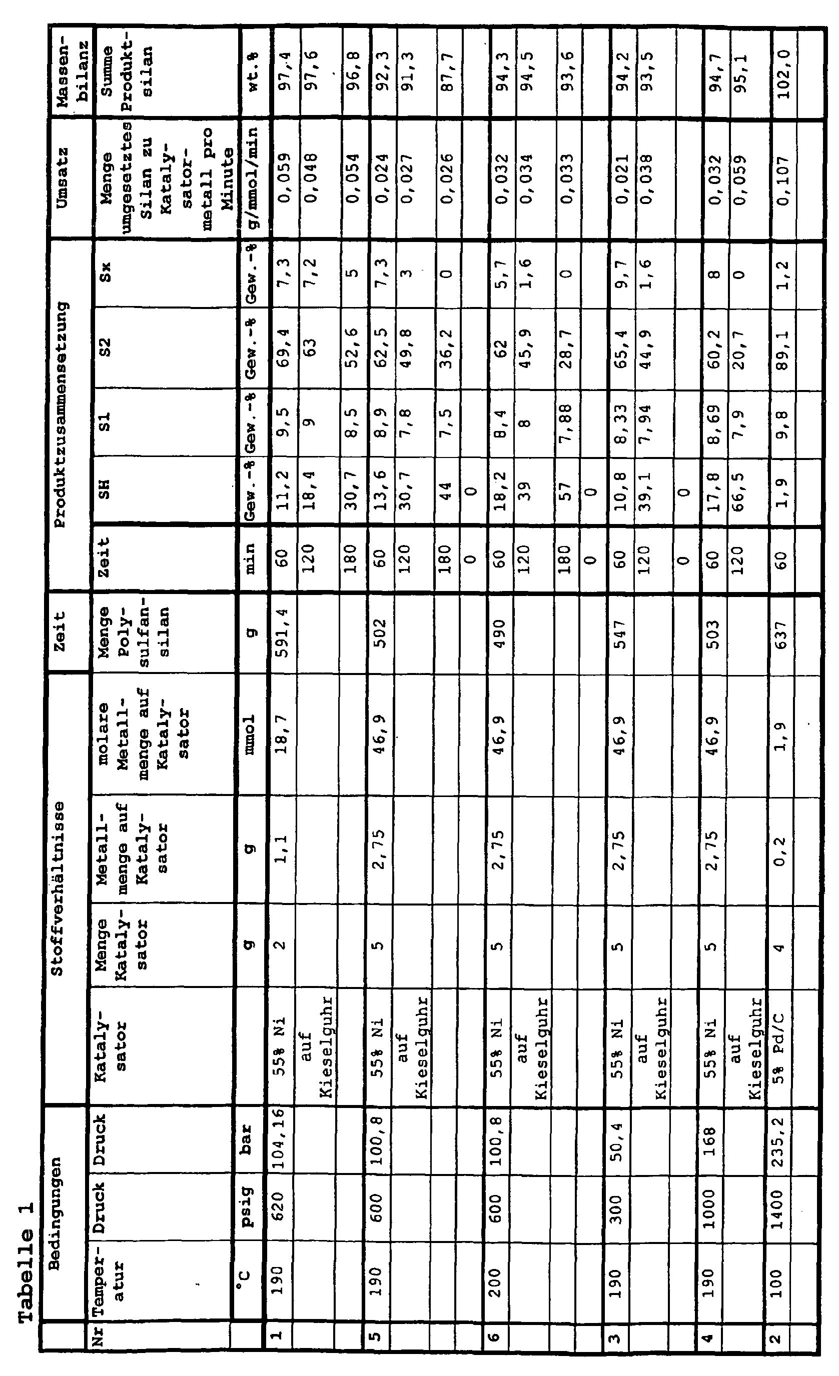

In der Tabelle 2 und 3 sind die erfindungsgemäßen Beispiele auf Basis eines Disulfansilans zusammengefaßt. In einer Apparatur der Firma Chemscan, die aus 8 parallel mittels Ölbad beheizten Autoklaven besteht, deren Reaktorvolumina 20 ml beträgt und die mit ankerförmigen Magnetrührern, die auf einer in der Reaktormitte befindlichen feststehenden Welle mit 1300 U/min rotieren, ausgestattet sind, werden gemäß den Bedingungen in Tabelle 2 und 3 Si 266 (Handelsprodukt der Degussa AG / [Bis(alkoxysilylorganyl)disulfid]) katalytisch hydriert. Die Reaktion wird nach den angegebenen Zeiten beendet. In den Spalten "Produktzusammensetzung" in Tabelle 2 und 3 werden nur die Komponenten Mercaptopropyl(triethoxysilan), Bis(triethoxysilylpropyl)disulfid, Bis(triethoxysilylpropyl)trisulfid und Bis(triethoxysilylpropyl)tetrasulfid berücksichtigt. Bis(triethoxysilylpropyl)monosulfid und 3-Chlorpropyl(triethoxysilan) werden vernachlässigt.

Die angegebene Produktzusammensetzung wird mittels ¹H-NMR ermittelt.

Das für die Versuche verwendete Si 266 enthielt laut kombinierten GC/HPLC und NMR-Analysen
1,7 Gew.-% Bis(triethoxysilylpropyl)monosulfid,
84 Gew.-% Bis(triethoxysilylpropyl)disulfid,
12 Gew.-% Bis(triethoxysilylpropyl)trisulfid und
1 Gew.-% Bis(triethoxysilylpropyl)tetrasulfid.

Die ermittelte durchschnittliche Kettenlänge der Polysulfanmischung beträgt ca. 2,14 (berücksichtigt wird nur der Mittelwert von S2-S10). Im verwendeten Si 266 sind 0,8 Gew.-% 3-Chlorpropyl(triethoxysilan) enthalten.

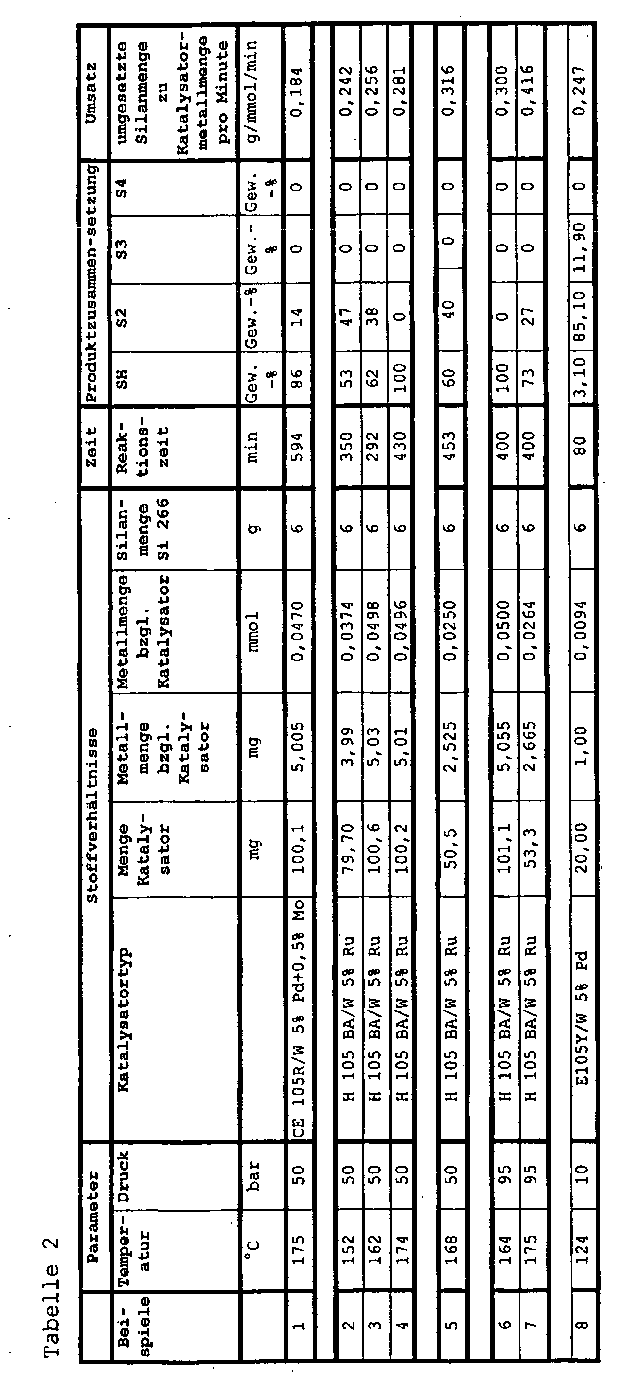

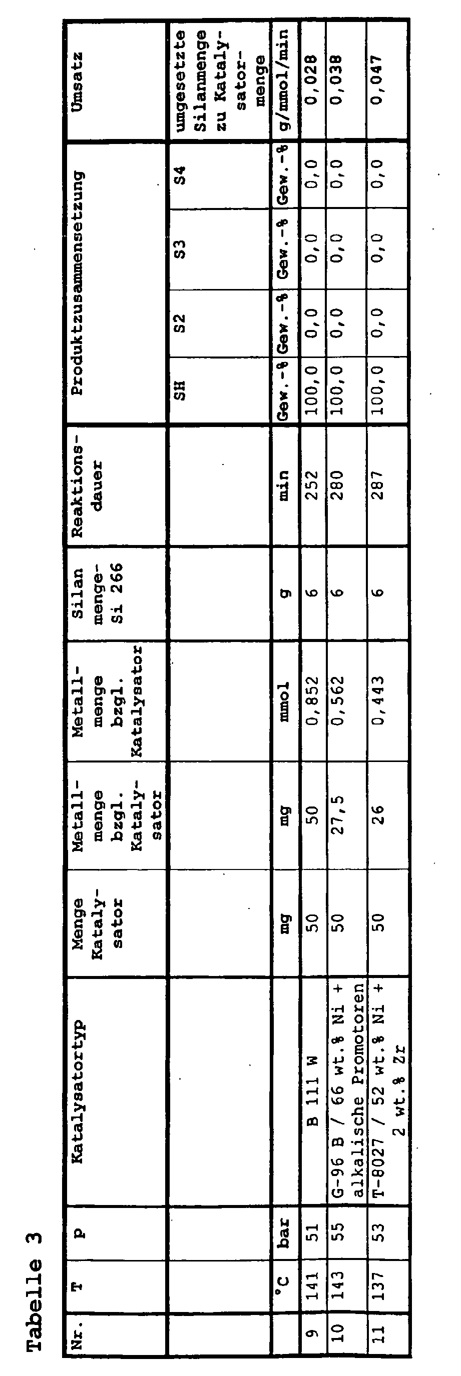

In der Tabelle 4 sind die erfindungsgemäßen Beispiele auf Basis eines Tetrasulfansilans zusammengefaßt. In einer Apparatur der Firma Chemscan, die aus 8 parallel mittels Ölbad beheizten Autoklaven besteht, deren Reaktorvolumina 20 ml beträgt und die mit ankerförmigen Magnetrührern, die auf einer in der Reaktormitte befindlichen feststehenden Welle mit 1300 U/min rotieren, ausgestattet sind, werden gemäß den Bedingungen in Tabelle 4 Si 69 (Handelsprodukt der Degussa AG / [Bis(alkoxysilylorganyl)tetrasulfid]) katalytisch hydriert.

Die Reaktion wird nach den angegebenen Zeiten beendet.

In den Spalten "Produktzusammensetzung" in Tabelle 4 werden nur die Komponenten Mercaptopropyl(triethoxysilan), Bis(triethoxysilylpropyl)disulfid, Bis(triethoxysilylpropyl)trisulfid und Bis(triethoxysilylpropyl)tetrasulfid berücksichtigt. Bis(triethoxysilylpropyl)monosulfid und 3-Chlorpropyl(triethoxysilan) werden vernachlässigt.

Die angegebene Produktzusammensetzung wird mittels ¹H-NMR ermittelt.

Das für die Versuche verwendete Si 69 enthält laut kombinierten GC/HPLC und NMR-Analysen
0,1 Gew.-% Bis(triethoxysilylpropyl)monosulfid,
17 Gew.-% Bis(triethoxysilylpropyl)disulfid,
27 Gew.-% Bis(triethoxysilylpropyl)trisulfid,
25 Gew.-% Bis(triethoxysilylpropyl)tetrasulfid und
ca. 29 Gew.-% Bis(triethoxysilylpropyl)polysulfid mit -Sxx≥5.

Die ermittelte durchschnittliche Kettenlänge der Polysulfanmischung beträgt 3,75. Es sind im Si 69 1,4 Gew.-% 3-Chlorpropyl(triethoxysilan) enthalten.

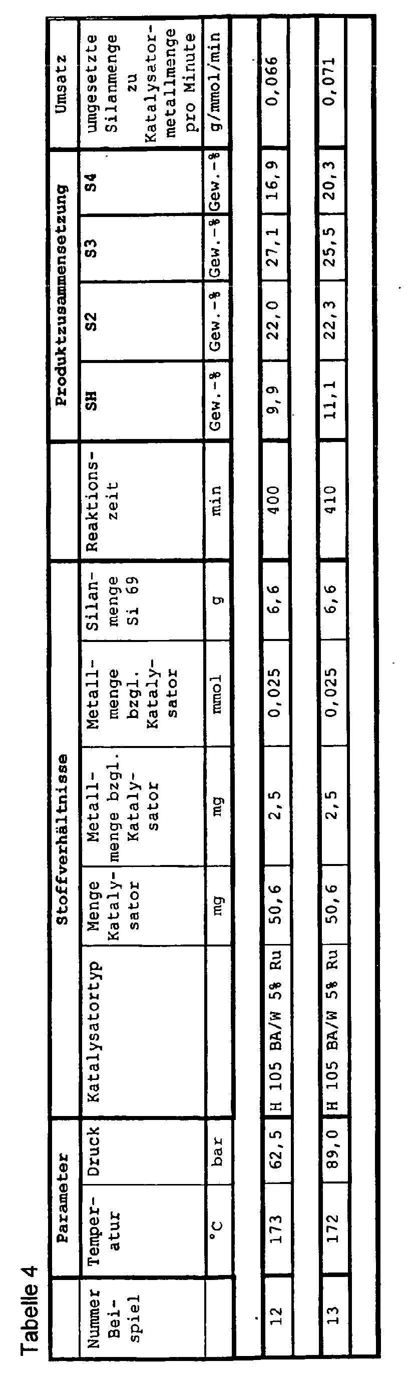

Die in den Tabellen enthaltenen Abkürzungen bedeuten:
SH = 3-Mercaptopropyl(triethoxysilan),
S2 = Bis(triethoxysilylpropyl)disulfid,
S3 = Bis(triethoxysilylpropyl)trisulfid,
S4 = Bis(triethoxysilylpropyl)tetrasulfid.

Si 69 [Bis(alkoxysilylorganyl)tetrasulfid] und Si 266 [Bis(alkoxysilylorganyl)disulfid] sind handelsübliche Bis(alkoxysilylorganyl)polysulfide der Degussa AG.

Die Katalysatoren mit den Kurzbezeichnungen H 105 BA/W 5% Ru, E 105 RS/W 5% Pd, CE 105 R/W 5% Pd + 0,5% Mo, E 105 Y/W 5% Pd, sowie B 111 W werden von der Degussa AG bezogen.

Bei den Katalysatoren mit den Kurzbezeichnungen H 105 BA/W 5% Ru, E 105 RS/W 5% Pd, CE 105 R/W 5% Pd + 0,5% Mo und E 105 Y/W 5% Pd handelt es sich um Edelmetallpulverkatalysatoren, die durch Aufbringung einer Edelmetallkomponente wie Ruthenium oder Palladium auf einem porösen, hochoberflächigen Trägermaterial hergestellt werden. Der Anteil der Edelemetallkomponente beträgt dabei 5 Gew.-% bezogen auf die Trockenmasse des Katalysators. Die Katalysatoren werden als pulverförmige, rieselfähige Feststoffe eingesetzt. Die genannten Katalysatoren sind auf Aktivkohlen geträgert.

Bei dem Katalysator mit der Kurzbezeichnung B 111 W handelte es sich um einen aktivierten Metall-Katalysator, der durch Suspendierung von feinverteiltem elementarem Nickel in wässriger Lösung hergestellt wird. Der Katalysator wird nach Abtrennung der Metallkomponente als pulverförmiger Feststoff eingesetzt.

Die Katalysatoren G-96 B und T 8027 sind Handelsprodukte der Süd-Chemie AG.

Der Katalysator G-96 B enthält 66% Nickel und alkalische Promotoren.

Der Katalysator T 8027 enthält 52% Nickel und 2,4% Zirkonium.

Für die Analyse der Produkte wird unter anderem ein DRX 500 NMR-Gerät der Firma Bruker gemäß den dem Fachmann bekannten Regeln und Bedienvorschriften verwendet. Die Messfrequenzen sind 99,35 MHz für ²⁹Si-Kerne und 500,13 MHz für ¹H-Kerne. Als Referenz dient Tetramethylsilan (TMS).

Die Analyse von Bis(alkoxysilylorganyl)polysulfiden und Mercaptoorganyl(alkoxysilanen) und deren Gemischen kann mit GC, HPLC und NMR erfolgen (U. Görl, J. Münzenberg, D. Luginsland, A. Müller Kautschuk Gummi Kunststoffe 1999, 52(9), 588, D. Luginsland Kautschuk Gummi Kunststoffe 2000, 53(1-2), 10 oder M. W. Backer et al, *Polymer Preprints* 2003, 44(1), 245)

Die Vergleichsbeispiele aus US 6.433.206 ohne den Zusatz von Entgiftungsreagenzien liefern, für ein nicht näher spezifiziertes Disulfansilan, im Falle von Nickel bei 190-200°C und <100 bar nur Umsätze von 0,021-0,038 g/mmol/min.

Das Vergleichsbeispiel aus US 6.433.206 ohne den Zusatz von Entgiftungsreagentien liefert, für ein nicht näher spezifiziertes Disulfansilan, im Falle von Palladium bei 190-200°C und 235 bar einen Umsatz von 0,107 g/mmol/min.

Das erfindungsgemäße Verfahren mit den Katalysatoren auf Basis Ruthenium erreicht einen Umsatz von 0,42 g/mmol/min bei milderen Bedingungen bezüglich Temperatur und Druck (maximal 175°C bei maximal 95 bar).Das erfindungsgemäße Verfahren mit Katalysatoren auf Basis von dotiertem Nickel erreicht, einen Umsatz von 0,38-0,47 g/mmol/min bei milderen Bedingungen bezüglich Temperatur und Druck (maximal 143°C bei maximal 55 bar).Das erfindungsgemäße Verfahren mit Katalysatoren auf Basis von dotiertem Palladium erreicht, einen Umsatz von 0,184 g/mmol/min bei milderen Bedingungen bezüglich Temperatur und Druck (175°C bei maximal 50 bar).

Das erfindungsgemäße Verfahren mit Katalysatoren auf Basis von Palladium erreicht, einen Umsatz von 0,247 g/mmol/min bei milderen Bedingungen bezüglich Temperatur und Druck (124°C bei maximal 10 bar).

## Patentansprüche

1. Verfahren zur Herstellung von Mercaptoorganyl( alkoxysilanen), **dadurch gekennzeichnet, daß** man Bis(alkoxysilylorganyl)polysulfide bei Temperaturen von <190°C und Drücken von <100 bar mit Wasserstoff und einem Übergangsmetallkatalysator ohne Zusatz von Wasser, Alkohol oder H₂S hydriert und die Katalysatorkonzentration bezogen auf das Katalytisch aktive Metall, 0,0001 bis 1 mmol pro 1g Bis(alkoxysilylorganyl)polysulfid beträgt.

2. Verfahren zur Herstellung von Mercaptoorganyl (alkoxysilanen) nach Anspruch 1, **dadurch gekennzeichnet, daß** das Bis(alkoxysilylorganyl) polysulfid eine Verbindung der allgemeinen Formel (I)
Z-A-Sₓ-A-Z (I)
ist, wobei
x eine Zahl von 1 bis 14 ist,
Z gleich oder verschieden SiX¹X²X³ oder Si (OCH₂-CH₂-) ₃N ist und
X¹, X², X³ jeweils unabhängig voneinander bedeuten können Hydroxy (-OH),
eine lineare, verzweigte oder ringförmige Kohlenwasserstoffkette mit 1-18 Kohlenstoffatomen (C1-C18),
ein Alkylsäure- (C_{y}H_{2y+1})-C(=O)O- mit y=1-25, ein substituierter Alkyl- beziehungsweise Alkenylsäuresubstituent,
ein Cycloalkanrest mit 5-12 Kohlenstoffatomen, Alkoxygruppen mit linearen oder verzweigten Kohlenwasserstoffketten,
eine Alkylethergruppe O-(CR^{I}₂- CR^{I}₂) -O-Alk,
eine Alkylpolyethergruppe O-(CR^{I}₂- CR^{I}₂O)ₐ-Alk, mit a = 2-25, R^{I} unabhängig voneinander H oder Alkylgruppe, Alk eine lineare oder verzweigte, gesättigte oder ungesättigte Alkylkette mit 1-30 Kohlenstoffatomen (C1-C30),
eine Cycloalkoxygruppe mit (C₅-C₁₂) -Atomen,
A eine lineare oder verzweigte, gesättigte oder ungesättigte aliphatische, aromatische oder gemischt aliphatische/aromatische zweibindige C₁-C₃₀ umfassende Kohlenwasserstoffkette ist.

3. Verfahren zur Herstellung von Mercaptoorganyl (alkoxysilanen) nach Anspruch 1, **dadurch gekennzeichnet, daß** die Bis(alkoxysilylorganyl) polysulfide Mischungen von Verbindungen der allgemeinen Formel I sind.

4. Verfahren zur Herstellung von Mercaptoorganyl (alkoxysilanen) nach Anspruch 1, **dadurch gekennzeichnet, daß** die katalytisch aktive Komponente zusätzlich dotiert ist bzw. zusätzliche Komponenten enthält.

5. Verfahren zur Herstellung von Mercaptoorganyl( alkoxysilanen) nach Anspruch 4, **dadurch gekennzeichnet, daß** die katalytisch aktive Komponente ein oder mehrere Alkalimetalle, Erdalkalimetalle, Elemente der 3. Hauptgruppe, Elemente der 4. Hauptgruppe, Elemente der 5. Hauptgruppe, Elemente der 6. Hauptgruppe, Elemente der 7. Hauptgruppe oder Nebengruppenelemente enthält.

6. Verfahren zur Herstellung von Mercaptoorganyl (alkoxysilanen) nach Anspruch 1, **dadurch gekennzeichnet, daß** der Übergangsmetallkatalysator als katalytisch aktive Komponente Nickel, Cobalt, Rhodium, Ruthenium, Palladium, Iridium oder Platin enthält.

7. Verfahren zur Herstellung von Mercaptoorganyl (alkoxysilanen) nach Anspruch 1, **dadurch gekennzeichnet, daß** man das Verfahren batchweise durchführt.

8. Verfahren zur Herstellung von Mercaptoorganyl (alkoxysilanen) nach Anspruch 1, **dadurch gekennzeichnet, daß** man das Verfahren kontinuierlich durchführt.

9. Verfahren zur Herstellung von Mercaptoorganyl (alkoxysilanen) nach Anspruch 1, **dadurch gekennzeichnet, daß** die Reaktionsmischung Additive enthält.

## Claims

1. Process for producing mercaptoorganyl(alkoxysilanes), **characterised in that** bis(alkoxysilylorganyl) polysulfides are hydrogenated at temperatures of <190° C and pressures of <100 bar with hydrogen and a transition metal catalyst without the addition of water, alcohol or H₂S, and the catalyst concentration, relative to the catalytically active metal, is 0.0001 to 1 mmol per 1 g of bis(alkoxysilylorganyl) polysulfide..

2. Process for producing mercaptoorganyl(alkoxysilanes) according to Claim 1, **characterised in that** the bis(alkoxysilylorganyl) polysulfide is a compound having the general formula (I)
Z-A-Sₓ-A-Z (I)
wherein
x is a number from 1 to 14, Z is the same or different and is SiX¹X²X³ or Si(OCH₂-CH₂-)₃N and
X¹, X², X³ can each mutually independently denote hydroxy (-OH),
a linear, branched or cyclic hydrocarbon chain having 1-18 carbon atoms (C1-C18), an alkyl acid substituent (C_{y}H_{2y+1}) -C (=O) O- where y=1-25, a substituted alkyl acid or alkenyl acid substituent, a cycloalkane radical having 5-12 carbon atoms, alkoxy groups with linear or branched hydrocarbon chains, an alkyl ether group O-(CR^{I}₂-CR^{I}₂)-O-alk, an alkyl polyether group 0-(CR^{I}₂-CR^{I}₂O)ₐ-alk, where a=2-25, R^{I} is mutually independently H or an alkyl group, alk is a linear or branched, saturated or unsaturated alkyl chain having 1-30 carbon atoms (C1-C30), a cycloalkoxy group having (C₅-C₁₂)-atoms, A is a linear or branched, saturated or unsaturated aliphatic, aromatic or mixed aliphatic/aromatic divalent C₁-C₃₀ hydrocarbon chain.

3. Process for producing mercaptoorganyl-(alkoxysilanes) according to Claim 1, **characterised in that** the bis(alkoxysilylorganyl) polysulfides are mixtures of compounds having the general formula I.

4. Process for producing mercaptoorganyl-(alkoxysilanes) according to Claim 1, **characterised in that** the catalytically active component is additionally doped or contains additional components.

5. Process for producing mercaptoorganyl-(alkoxysilanes) according to Claim 4, **characterised in that** the catalytically active component contains one or more alkali metals, alkaline earth metals, elements from the 3^{rd} main group, elements from the 4^{th} main group, elements from the 5^{th} main group, elements from the 6^{th} main group, elements from the 7^{th} main group or subgroup elements.

6. Process for producing mercaptoorganyl-(alkoxysilanes) according to Claim 1, **characterised in that** the transition metal catalyst contains nickel, cobalt, rhodium, ruthenium, palladium, iridium or platinum as the catalytically active component.

7. Process for producing mercaptoorganyl-(alkoxysilanes) according to Claim 1, **characterised in that** the process is performed batchwise.

8. Process for producing mercaptoorganyl-(alkoxysilanes) according to Claim 1, **characterised in that** the process is performed continuously.

9. Process for producing mercaptoorganyl-(alkoxysilanes) according to Claim 1, **characterised in that** the reaction mixture contains additives.

## Revendications

1. Procédé de préparation de mercaptoorganyl-(alcoxysilanes), **caractérisé en ce qu'**à des températures de <190°C et à des pressions de <100 bars on hydrogène des bis-(alcoxysilylorganyl)-polysulfures avec de l'hydrogène et un catalyseur à base de métal de transition, sans addition d'eau, d'alcool ou de H₂S, et **en ce que** la concentration du catalyseur relative au métal catalytiquement actif est de 0,0001 à 1 mmole pour 1 g de bis-(alcoxysilylorganyl)-polysulfure.

2. Procédé de préparation de mercaptoorganyl-(alcoxysilanes) suivant la revendication 1, **caractérisé en ce que** le bis-(alcoxysilylorganyl)-polysulfure est un composé de la formule générale (I) :
Z-A-Sₓ-A-Z (I)
dans laquelle
x est un nombre de 1 à 14,
Z sont identiques ou différents et représentent SiX¹X²X³ ou Si(OCH₂-CH₂-)₃N,
X¹, X², X³ peuvent chacun signifier indépendamment les uns des autres un groupe hydroxy (-OH),
une chaîne hydrocarbonée linéaire, ramifiée ou cyclique comportant 1 à 18 atomes de carbone (C1-C18),
un acide alkylique, (C_{y}H_{2Y+1})-C(=O0)O-, avec y = 1-25, un substituant d'acide alkylique ou alcénylique substitué,
un radical de cycloalcane comportant 5 à 12 atomes de carbone,
des groupes alcoxy à chaîne hydrocarbonée linéaire ou ramifiée,
un groupe alkyléther O-(CR^{I}₂- CR^{I}₂) -O-Alk,
un groupe alkylpolyéther O- (CR^{I}₂- CR^{I}₂O)ₐ-Alk, où a = 2-25, R^{I} représentent indépendamment l'un de l'autre H ou un groupe alkyle, Alk est une chaîne alkylée linéaire ou ramifiée, saturée ou insaturée, comportant 1 à 30 atomes de carbone (C1-C30),
un groupe cycloalcoxy comportant 5 à 12 atomes de C, et
A est une chaîne hydrocarbonée en C₁-C₃₀ à deux liaisons, linéaire ou ramifiée, saturée ou insaturée, aliphatique, aromatique ou aliphatique/aromatique mixte.

3. Procédé de préparation de mercaptoorganyl-(alcoxysilanes) suivant la revendication 1, **caractérisé en ce que** les bis-(alcoxysilylorganyl)-polysulfures sont des mélanges de composés de la formule générale I.

4. Procédé de préparation de mercaptoorganyl-(alcoxysilanes) suivant la revendication 1, **caractérisé en ce que** le composant catalytiquement actif est en outre dopé ou contient des composants supplémentaires.

5. Procédé de préparation de mercaptoorganyl-(alcoxysilanes) suivant la revendication 4, **caractérisé en ce que** le composant catalytiquement actif contient un ou plusieurs métaux alcalins, métaux alcalino-terreux, éléments du troisième groupe principal, éléments du quatrième groupe principal, éléments du cinquième groupe principal, éléments du sixième groupe principal, éléments du septième groupe principal ou éléments de groupes secondaires.

6. Procédé de préparation de mercaptoorganyl-(alcoxysilanes) suivant la revendication 1, **caractérisé en ce que** le catalyseur à base de métal de transition contient, comme composant catalytiquement actif, du nickel, du cobalt, du rhodium, du ruthénium, du palladium, de l'iridium ou du platine.

7. Procédé de préparation de mercaptoorganyl-(alcoxysilanes) suivant la revendication 1, **caractérisé en ce qu'**on effectue le procédé de manière discontinue.

8. Procédé de préparation de mercaptoorganyl-(alcoxysilanes) suivant la revendication 1, **caractérisé en ce qu'**on effectue le procédé de manière continue.

9. Procédé de préparation de mercaptoorganyl-(alcoxysilanes) suivant la revendication 1, **caractérisé en ce que** le mélange réactionnel contient des additifs.
